# EUROPEAN PATENT SPECIFICATION

(11) **EP 1 036 710 B1**
(45) Date of publication and mention of the grant of the patent: **06.07.2005**
(21) Application number: 00105230.7
(22) Date of filing: 13.03.2000
(51) Int. Cl.: B60R 16/00, B60Q 1/14

(54) **Rotary switch assembly for vehicle**
Kraftfahrzeugdrehschalter
Interrupteur rotatif pour véhicule

(30) Priority: 15.03.1999 JP 6903099
(43) Date of publication of application: 20.09.2000
(73) Proprietor: Kabushiki Kaisha Tokai Rika Denki Seisakusho, Niwa-gun, Aichi-ken 480-0195 (JP); Toyota Jidosha Kabushiki Kaisha, Toyota-shi, Aichi-ken 471-8571 (JP)
(72) Inventor: Maeda, Isao, c/o K.K. Tokai Rika Denki Seisakusho, Niwa-gun, Aichi-ken 480-0195 (JP); Ito, Yoshizo, Toyota-shi, Aichi-ken 471-8571 (JP)
(74) Representative: Geyer, Werner, Dr.-Ing.

(56) References cited:
- EP-A- 0 446 126
- EP-A- 0 785 104
- EP-A- 0 803 404
- EP-A- 0 881 707
- US-A- 5 859 396

## Description

The present invention relates to a rotary switch assembly according to the preamble of claim 1.

To control headlights and tail lights of a vehicle and to turn on and off its fog lights, a rotary switch assembly on the steering column is operated. This rotary switch assembly has a rotary switch knob for controlling the headlights and the tail lights and a rotary switch knob for turning the fog lights on and off. The knobs are coaxial.

In an example of this type of rotary switch assembly, a rotary switch knob for switching types of lights (hereinafter referred to as "switching knob") and a rotary switch knob for turning fog lights on and off (hereinafter referred to as "fog knob") can be operated independently. With this switch assembly, the operator is likely to forget to turn off the fog lights since the fog lights are not turned off when the switching knob is operated to turn off the headlights and the tail lights. A rotary switch assembly according to the preamble of claim 1 is disclosed in EP-A-0 881 707. Further, U.S. Patent No. 5,629,505 discloses a rotary switch assembly, which is shown in FIG. 21 herein. In this switch assembly, a cam surface 301 is formed on one end of a switching knob 300. When the knob 300 is rotated to a tail light or headlight on position, a cam follower 302 is moved by the cam surface 301 to a position disengaging a latch member 303. This causes the latch member 303 to engage one of a plurality of notches 306 formed in a fixed member 305 by the force of a spring 304.

A fog knob 307 is rotatable under the above conditions. When the fog knob 307 is rotated, the latch member 303 rotates together with the fog knob 307 to engage another notch 306.

Further, when the switching knob 300 is in a tail light and headlight off position, the cam follower 302 releases the latch member 303 from the fixed member 305 through the cam surface 301. As a result, the latch member 303 is rotated to the off position by the force of a torsion spring 308 to set the fog knob 307 in a fog off position. This prevents the operator from forgetting to turn off the fog lights.

However, the above-described rotary switch assembly requires a number of components, such as the cam follower 302, the latch member 303, the fixed member 305 and the two springs 304 and 308, between the switching knob 300 and the fog knob 307, and the number of assembling steps is relatively high. Therefore, fabrication of this switch assembly is complicated and costly.

An object of the present invention is to provide a rotary switch assembly for vehicles that can be easily fabricated.

Another object of the present invention is to provide an inexpensive rotary switch assembly for vehicles.

To achieve the above objects, the present invention provides a rotary switch assembly according to claim 1. In particular, the assembly has a first rotary switch, a second rotary switch, a first mechanism, and a second mechanism. The first rotary switch moves between a plurality of positions including an ON-position and an OFF-position. The second rotary switch is coaxially aligned with the first rotary switch and movable between a plurality of positions including an ON-position and an OFF-position. The first mechanism selectively locks and unlocks the second rotary switch based on the position of the first rotary switch. The second mechanism moves the second rotary switch to its OFF-position when the second rotary switch is in its ON-position and the first rotary switch is shifted to its OFF-position. The second mechanism includes a link member provided on one of the first rotary switch and the second rotary switch and an engaging portion provided with the other of the first rotary switch and the second rotary switch (150). The engaging portion is arranged to contact the link member. The second rotary switch receives torque from the first rotary switch and rotates to its OFF-position when the first rotary switch is rotated to its OFF-position. The first and second mechanisms are constituted by axially cooperating parts.

Other aspects and advantages of the present invention will become apparent from the following description, taken in conjunction with the accompanying drawings, illustrating by way of example the principles of the invention.

The features of the present invention that are believed to be novel are set forth with particularity in the appended claims. The invention, together with objects and advantages thereof, may best be understood by reference to the following description of the presently preferred embodiments together with the accompanying drawings in which:
FIG. 1 is a sectional view of a rotary switch assembly in a first embodiment of the present invention;
FIG. 2 is an exploded perspective view of the switch assembly shown in FIG. 1;
FIG. 3(a) is a bottom view of a light switch knob;
FIG. 3(b) is a sectional view taken along a line 3(b)-3(b) of FIG. 3(a);
FIG. 4 is a plan view of a fixed knob;
FIG. 5(a) is a sectional view taken along a line 5(a)-5(a) of FIG. 4;
FIG. 5(b) is a sectional view taken along a line 5(b)-5(b) of FIG. 4;
FIG. 6 is a sectional view for illustrating the operation of a lock piece;
FIG. 7(a) is a plan view of a fog switch knob in an R1 position ("fog off" position);
FIG. 7(b) is a plan view of the fog switch knob in an R2 position ("front fog on" position);
FIG. 8 is a sectional view for illustrating the operation of the lock piece;
FIG. 9 is a sectional view showing a condition in which a lever engages in the fog switch knob;
FIG. 10(a) is a plan view showing the fog switch knob in the R1 position ("fog off" position);
FIG. 10(b) is a plan view showing the fog switch knob in the R2 position ("front fog on" position);
FIG. 10(c) is a plan view showing the fog switch knob in an R3 position ("front and rear fog on" position);
FIG. 11 is a time chart showing the on and off conditions of the respective lights;
FIG. 12 is a sectional view of a rotary switch assembly in a second embodiment of the present invention;
FIG. 13 is a sectional view showing the operation of the switch assembly shown in FIG. 12;
FIG. 14 is an exploded perspective view of the switch assembly shown in FIG. 12;
FIG. 15(a) is a plan view of a fixed knob;
FIG. 15(b) is a sectional view taken along a line 15(b)-15(b) of FIG. 15(a); .
FIG. 15(c) is a sectional view taken along a line 15(c)-15(c) of FIG. 15(a);
FIG. 15(d) is a bottom view of the fixed knob;
FIG. 16(a) is a plan view of a fog switch knob; and FIG. 16(b) is a sectional view of the main portion of a lock mechanism;
FIGS. 17(a), 17(b) and 17(c) are schematic diagrams showing the operations of the lock mechanism, respectively;
FIGS. 18(a) and 18(b) are schematic diagrams showing the operations of the lock mechanism, respectively;
FIGS. 19(a) and 19(b) are plan views showing the fog switch knob in a Z1 position ("fog off" position), respectively; and FIG. 19(c) is a plan view showing the fog switch knob in a Z2 position ("rear fog on" position);
FIG. 20 is a time chart showing the on and off conditions of respective lights; and

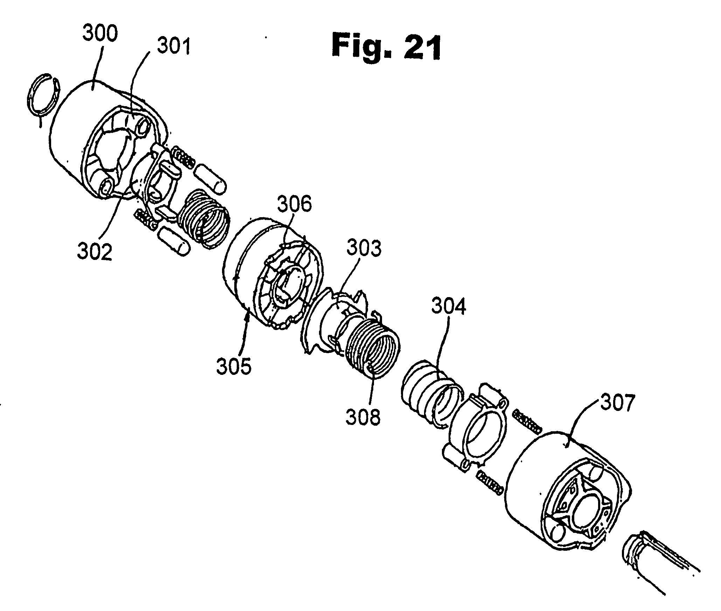

FIG. 21 is an exploded perspective view showing a conventional rotary switch assembly.

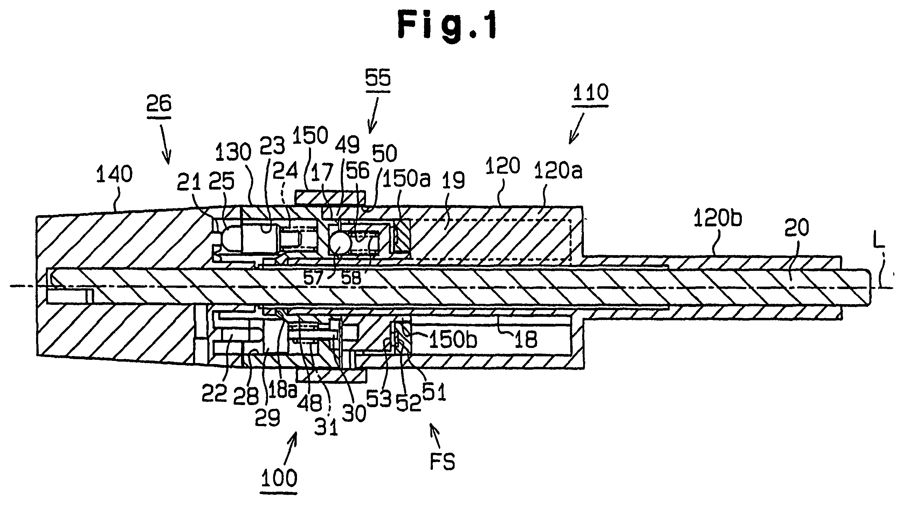

A first embodiment of the present invention will be described with reference to FIGS. 1 to 11.

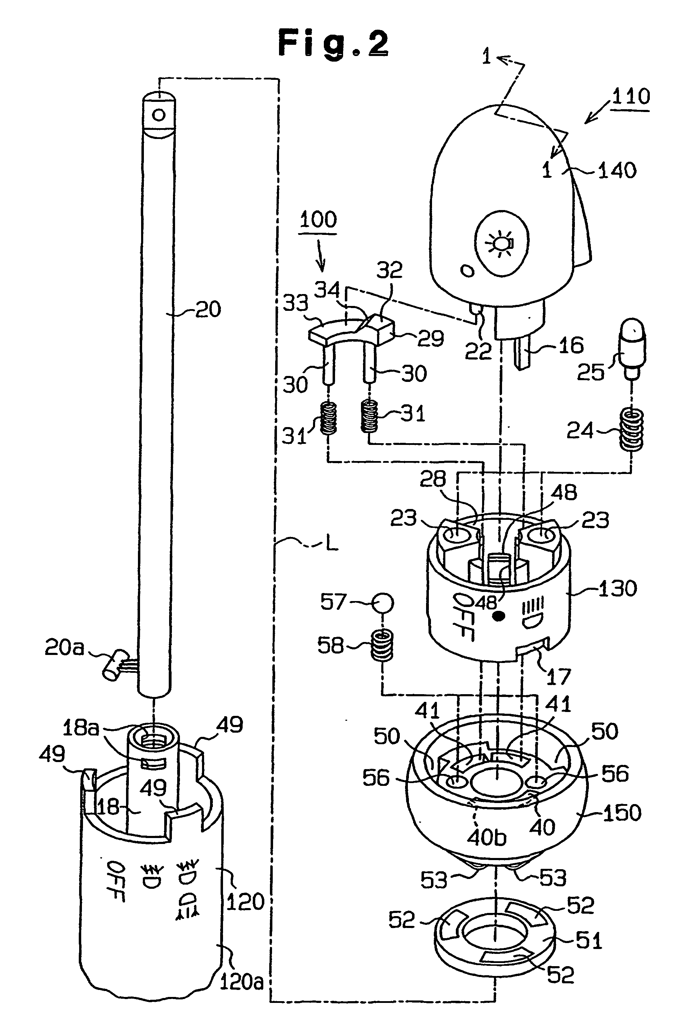

FIGS. 1 and 2 show a switch assembly 110. FIG. 1 is a sectional view taken along a line 1-1 of FIG. 2, and is 90° out of phase with FIG. 2 about an axis L. The switch assembly 110 has an outer cylindrical shaft 120, a fixed knob 130 secured to the outer cylindrical shaft 120, a light switch knob 140 and a fog switch knob 150. Both the light switch knob 140 and the fog switch knob 150 are rotary switch knobs.

The outer cylindrical shaft 120 has a large diameter portion 120a and a small diameter portion 120b. An inner cylinder 18, the inner diameter of which is the same as the inner diameter of the small diameter portion 120b, axially extends through the large diameter portion 120a. A plurality of engaging pieces 49 project from the distal end of the large diameter portion 120a of the outer cylindrical shaft 120. The distal end of the inner cylinder 18 projects further from that of the large diameter portion 120a. In the circumferential wall of the inner cylinder 18, a pair of engaging through holes 18a are formed at diametrically opposed positions. As shown in FIG. 1, the inner circumferential surface of the large diameter portion 120a is coupled to the inner cylinder 18 by a plurality of plate-shaped ribs 19 within the large diameter portion 120a.

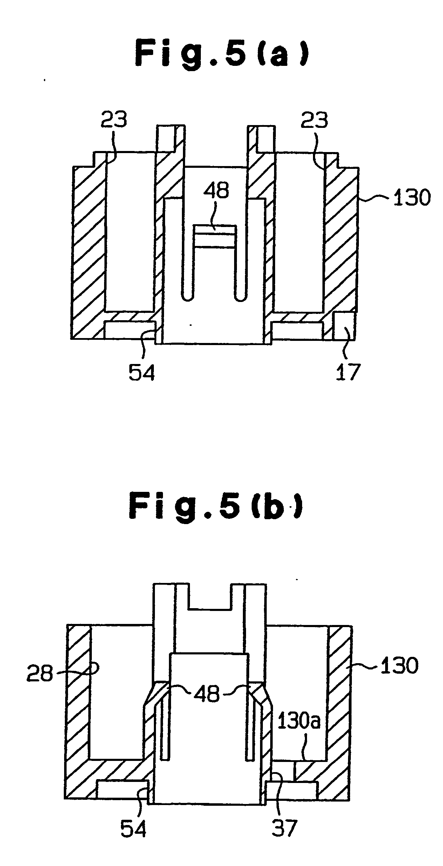

The fixed knob 130 is attached to the distal end of the inner cylinder 18. The fixed knob 130 is of a substantially bottomed, cylindrical form. As shown in FIG. 5(a), a boss 54 extends axially from the bottom center of the fixed knob 130. A pair of engaging catches 48 are formed at diametrically opposed locations of the upper portion of the boss 54. The fixed knob 130 is fitted around the inner cylinder 18 through the boss 54 and fixed to the inner cylinder 18 by the catches 48 engaging the engaging holes 18a of the inner cylinder 18. Further, a plurality of recesses 17 are formed in the outer surface of the lower circumferential wall of the fixed knob 130. The recesses 17 are spaced from each other by a predetermined angle as shown in FIG. 2. The recesses 17 receive the engaging pieces 49. The engagement of the engaging pieces 49 with the recesses 17 prevents the fixed knob 130 from rotating about the axis L. As shown in FIG. 1, a lever shaft 20 having the light switch knob 140 attached to its distal end is inserted into the inner cylinder 18. A cam member 20a is secured to the proximal end of the lever shaft 20. When the light switch knob 140 is rotated about the axis L, the cam member 20a rotates to move an unillustrated switch sliding element. This movement allows the switch sliding element to change its position relative to a fixed electrode panel within a switch box, which is located at the proximal end of the shaft 20. Thus, the tail lights and the headlights can be turned on and off.

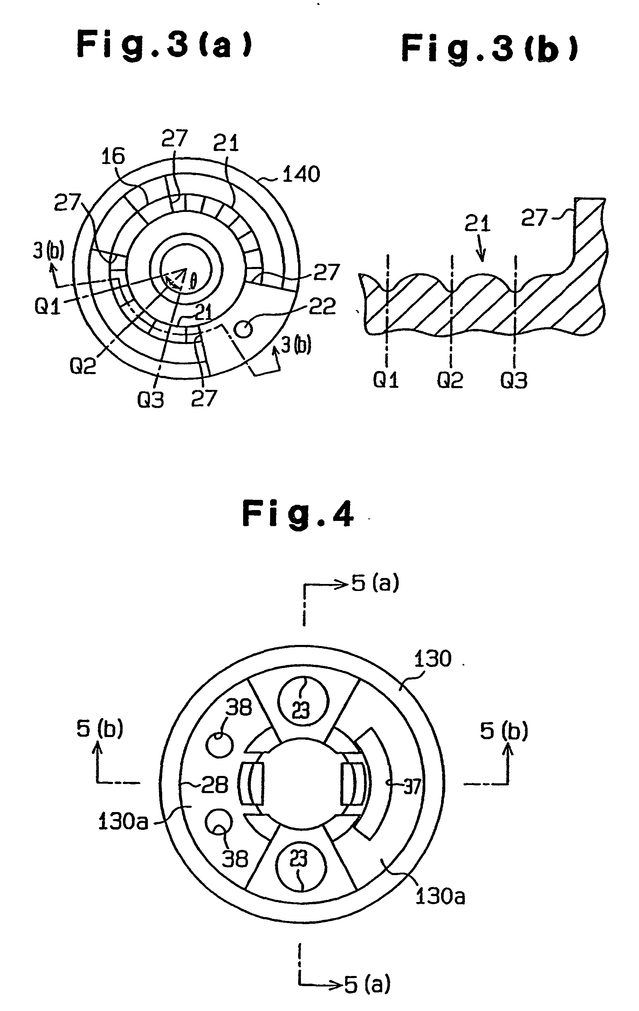

A pair of positioning portions 21 are located at diametrically opposed positions on the inner bottom surface of the light switch knob 140 as shown in FIG. 3(a). The positioning portions 21 are arcuate in cross section, as shown in FIG. 3(b). Further, a projection 22 extends axially toward the fixed knob 130 from the bottom surface of the lower portion of the light switch knob 140 between the positioning portions 21 as shown in FIG. 3(a).

Further, from the bottom surface of the light switch knob 140, a lever 16 projects in the axial direction at a position substantially diametrically opposed to the projection 22. The lever 16 extends toward the fog switch knob 150 through an arcuate elongated hole 37 formed in the bottom 130a of the fixed knob 130 (FIG. 4). The circumferential length of the hole 37 is such that the fixed knob 130 does not interfere with the rotation of the lever 16 during rotation of the light switch knob 140.

A pair of accommodating holes 23 are formed in the fixed knob 130 and are located at diametrically opposed positions. A coil spring 24 and a positioning piece 25 are accommodated in each accommodating hole 23. Each positioning piece 25 has a hemispherical distal end, and its proximal end is columnar. The positioning pieces 25 abut the positioning portions 21 of the light switch knob 140 while biased by the coil springs 24. Only one set of the coil spring 24 and the positioning piece 25 is shown in FIG. 1.

The positioning portions 21, the coil springs 24 and the positioning pieces 25 form a positioning mechanism 26, or detent mechanism of the light switch knob 140.

When the light switch knob 140 rotates, the positioning pieces 25 ride over the projections of the positioning portions 21 against the force of the coil springs 24, move to adjacent recesses, and settle in the recesses. Once each positioning piece 25 has moved to a recess, the switch position is held by the force of the coil springs 24 unless the light switch knob 140 is operated.

In this embodiment, the range of rotation of the light switch knob 140 is regulated such that stop positions are located at every predetermined angle θ as shown in FIG. 3(a). Walls 27 are located at both ends of each positioning portion 21. When the positioning piece 25 abuts one of the walls 27, it is held in the recess of the positioning portion 21 that is adjacent such wall 27. When each positioning piece 25 is retained in one of the recesses of each positioning portion 21, the light switch knob 140 is located in one of an "off" position Q1, in which both the headlights and the tail lights are off, a "first on" position Q2, in which the headlights are off and the side lights turn on, and a "second on" position Q3 correspond to recesses as indicated by the radial lines in FIG. 3(a) and the vertical lines in FIG. 3(b).

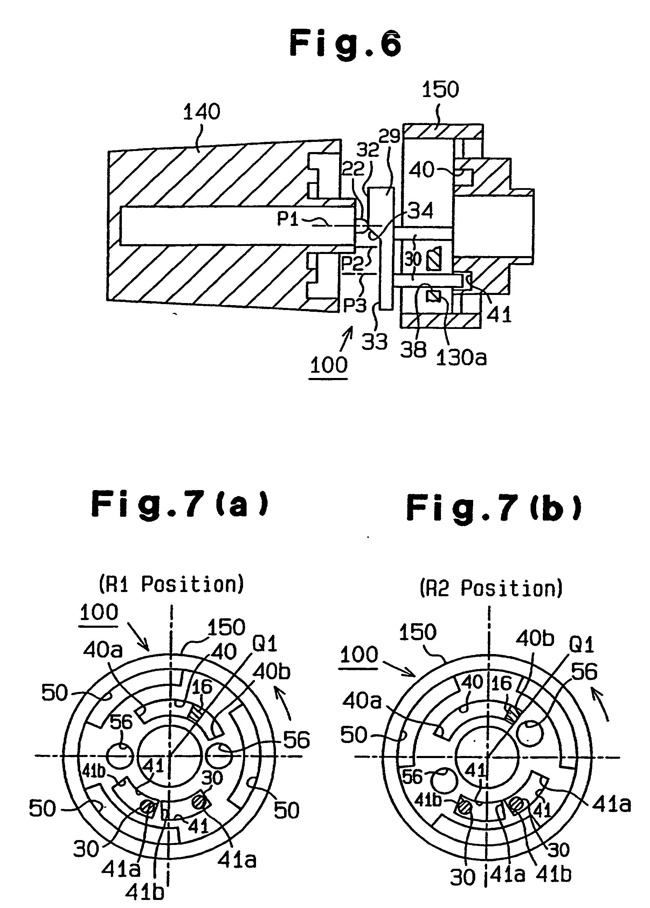

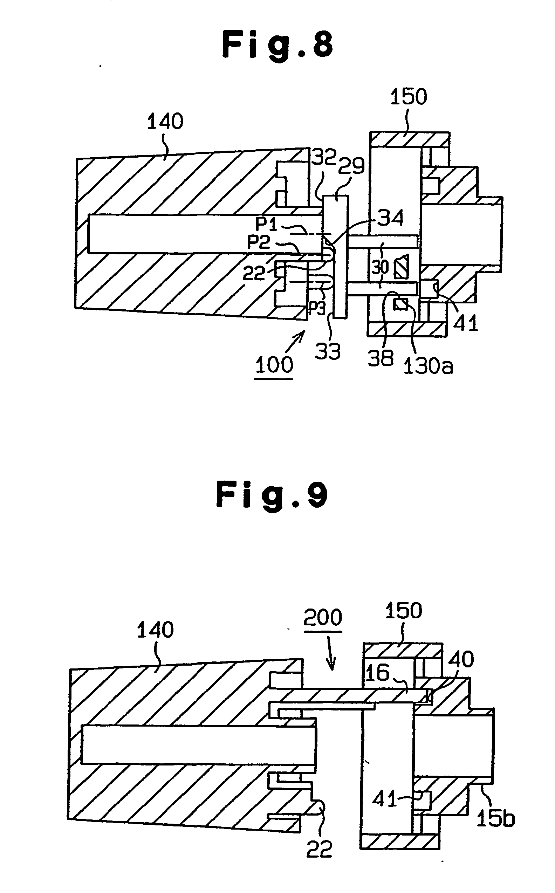

Further, the projection 22 is located in positions P1, P2 and P3 as shown in FIGS. 6 and 8 when the light switch knob 140 is in the "off" position Q1, the "first on" position Q2 and the "second on" position Q3, respectively.

The fog switch knob 150 is fitted around the inner cylinder 18 between the fixed knob 130 and the outer cylindrical shaft 120 to rotate about the axis L. The fog switch knob 150 substantially cylindrical and is smaller in diameter on proximal end than on its distal end. The fog switch knob 150 has an inner body as shown in FIG. 2. As shown in FIG. 1, a proximal end 150a of the fog switch knob 150 has an axially projecting small diameter portion 150b. The small diameter portion 150b contacts the distal ends of the coupling ribs 19. As shown in FIGS. 1 and 2, arcuate through holes 50 are formed in the inner body of the fog switch knob 150, and the engaging pieces 49 pass through the holes 50. How far the fog switch knob 150 can rotate is regulated by the through holes 50.

A pair of holes 56 are formed in the upper surface of the inner body of the fog switch knob 150 at diametrically opposed positions. A detent ball 57 and a coil spring 58 are accommodated in each hole 56. The detent balls 57 are urged by the coil springs 58 and thus contact unillustrated positioning stops on the bottom surface of the fixed knob 130. Each positioning stop has a plurality of projections and recesses. Further, the small diameter portion 150b is urged toward the ribs 19 by the coil springs 58.

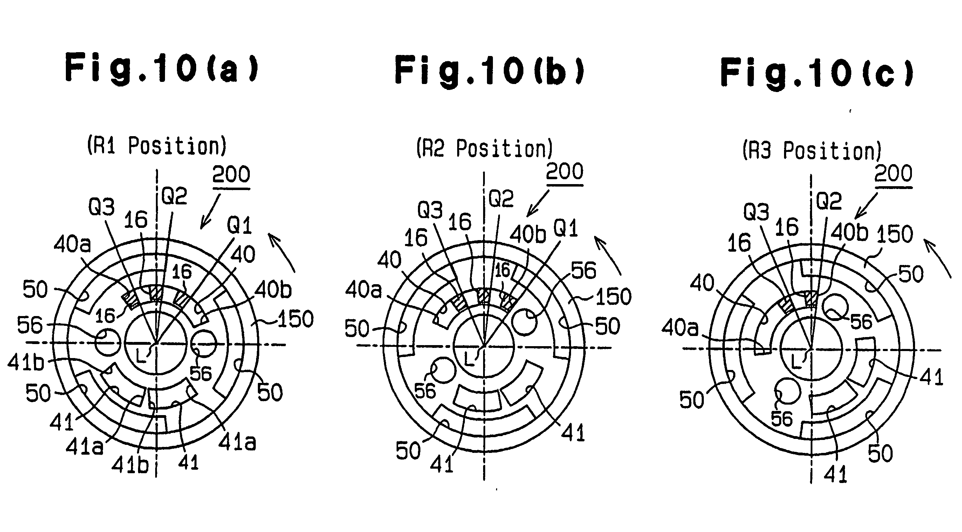

When rotated, the fog switch knob 150 causes each detent ball 57 move from one recess to another of the corresponding positioning stops. This allows the fog switch knob 150 to be lightly held in the R1 position shown in FIGS. 7(a) and 10(a), the R2 position shown in FIGS. 7(b) and 10(b), and the R3 position shown in FIG. 10(c). The R1 position is a "fog off" position, in which the fog switch knob 150 turns off both the front fog lights and the rear fog lights. The R2 position is a "front fog on" position, in which the fog switch knob 150 turns on the front fog lights. The R3 position is a "front and rear fog on" position, in which the fog switch knob 150 turns on both the front fog lights and the rear fog lights.

The positioning stops of the fixed knob 130, the detent balls 57 and the coil springs 58 constitute a positioning mechanism 55, or detent mechanism, for the fog switch knob.

In the inner body of the fog switch knob 150, an arcuate cancel hole 40, the center of curvature of which is the axis L, is formed at a position corresponding to the lever 16. The lever 16 passes through the cancel hole 40. The counterclockwise end of the cancel hole 40 (hereinafter referred to as the "fog on end 40a") contacts the lever 16 when the light switch knob 140 is in the "second on" position Q3 as shown in FIG. 10(a) and when the fog switch knob 150 is in the R1 position. The arrows in FIG. 10 indicate the fog on operation direction.

When the fog switch knob 150 is in the R2 position ("front fog on" position), the clockwise end of the cancel hole 40 (hereinafter referred to as the "fog off end 40b") contacts the lever 16 when the light switch knob 140 is in the "off" position Q1 as shown in FIG. 10(b).

Further, when the fog switch knob 150 is in the R3 position ("front and rear fog on" position), the fog off end 40b of the cancel hole 40 can abut the lever 16 of the light switch knob 140 that is in the "first on" position Q2 as shown in FIG. 10(c).

The lever 16 and the cancel hole 40 constitute a cancel mechanism 200.

As shown in FIG. 1, a fixed fog light electrode panel 51, which is loosely fitted around the inner cylinder 18, is fixed to the distal ends of the coupling ribs 19. The fog light electrode panel 51 is constructed of a disk-shaped print board, which has a central fitting hole and a plurality of terminals 52. As shown in FIG. 2, contacts 53, which are located on the proximal end face of the fog switch knob 150, constitute a fog light switch FS for closing or opening the terminals 52 of the electrode panel 51 by contacting the fog light electrode panel 51 when the fog switch knob 150 is rotated from the R1 position ("fog off" position) to the R2 position ("front fog on" position) or to the R3 position ("front and rear fog on" position). Connected to the terminals 52 is an unillustrated switching harness that is inserted into the outer cylindrical shaft 120, and the switching harness extends outward from the outer cylindrical shaft 120.

Fog lights (not shown), which are to be turned on and off by the fog light switch FS, are located at the front and rear of the vehicle. The fog light switch FS is a switch for turning the front and the rear fog lights on and off.

An accommodating hole 28 is formed in the fixed knob 130. As shown in FIG. 1, a lock piece 29 is fitted in the accommodating hole 28. The lock piece 29 can slide axially. The lock piece 29 is arcuate as shown in FIG. 2 and constitutes an operating member. A pair of columns 30 project from the proximal surface of the lock piece 29, and coil springs 31 are fitted around the columns 30. The columns 30 constitute lock projections in this embodiment. The coil springs 31 contact the bottom of the accommodating hole 28 to urge the lock piece 29 toward the light switch knob 140.

The distal surface of the lock piece 29, which faces the light switch knob 140, has a lock surface 32, a non-lock surface 33 and a ramp 34. The lock surface 32 is located near the light switch knob 140 and is perpendicular to the axis L. The non-lock surface 33 is closer to the fixed knob 130 than the lock surface 32 and is perpendicular to the axis L. The ramp 34 connects the two surfaces 32 and 33. The lock surface 32 corresponds to the P1 position of the projection 22. The non-lock surface 33 corresponds to the P2 and P3 positions of the projection 22. The lock piece 29 contacts the projection 22 at all times due to the coil springs 31.

In the bottom 130a of the accommodating hole 28 of the fixed knob 130, a pair of insertion holes 38 are formed at positions corresponding to the columns 30 as shown in FIG. 4, and the pair of columns 30 loosely fit into these holes 38.

When the projection 22 is in the P2 or P3 position as shown in FIG. 8, the projection 22 contacts the non-lock surface 33 of the lock piece 29, and the columns 30 slightly project from the lower surface of the bottom 130a of the fixed knob 130. This position is referred to as the non-lock position.

Further, when the projection 22 is in the P1 position as shown in FIG. 6, the projection 22 contacts the lock surface 32 of the lock piece 29, and the columns 30 projects further from the lower surface of the bottom 130a of the fixed knob 130. This position is referred to as the lock position.

In the inner body of the fog switch knob 150, a pair of arcuate lock holes 41 are diametrically opposed to the cancel hole 40 and correspond to the columns 30. The lock holes 41 receive the columns 30, respectively, when the column 30 are in the lock position. The fog on end 41a of each lock hole 41 contacts the corresponding column 30 when the column 30 are in the lock position as shown in FIG. 7(a) and when the fog switch knob 150 is in the R1 position ("fog off" position). The arrows in FIG. 7(a) and 7(b) indicate the fog on direction.

Further, when the fog switch knob 150 is in the R2 position ("front fog on" position), the fog off end 41b of each lock hole 41 contacts the corresponding column 30 when the column 30 are in the lock position as shown in FIG. 7(b).

That is, the fog switch knob 150 can move only between the R1 position ("fog off" position) and the R2 position ("front fog on" position) since the columns 30 restrict movement of the fog switch knob 150.

The projection 22, the lock piece 29, the columns 30, the coil springs 31 and the lock holes 41 constitute a lock mechanism 100. The coil springs 31 constitute urging means.

Now, the operation of the switch assembly 110 will be described.

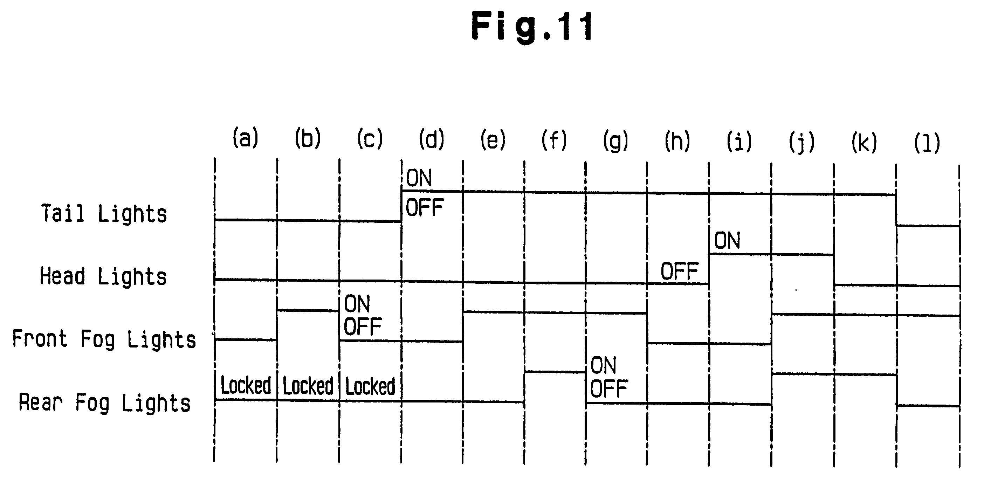

Initially, the light switch knob 140 is assumed to be in the "off" position Q1 and the fog switch knob 150 in the R1 position ("fog off" position). In this case, the headlights, the tail lights, the front fog lights and the rear fog lights are turned off (see FIG. 11(a)).

In this condition, the projection 22 of the light switch knob 140 is in the P1 position shown in FIG. 6 and thus contacts the lock surface 32. As a result, the lock piece 29 is pushed by the projection 22 against the force of the coil springs 31, which causes the columns 30 to enter the lock holes 41. Further, the lever 16 is in the "off" position Q1 shown in Fig. 7(a).

Under these conditions, when the fog switch knob 150 is rotated counterclockwise as viewed in FIG. 7(a) from the R1 position ("fog off" position) to the R2 position "front fog on" position), the lock holes 41 allow the fog switch knob 150 to rotate. Thus, the fog switch knob 150 moves into the position shown in FIG. 7(b). By this rotation of the fog switch knob 150, the front fog lights are turned on.

Further, if the fog switch knob 150 is rotated from the R2 position "front fog on" position) to the R3 position ("front and rear fog on" position), the fog off ends 41b of the lock holes 41 contact the columns 30, which are in the lock position, as shown in FIG. 7(b). Thus, the fog switch knob 150 cannot be further rotated. That is, the rear fog lights are locked so that they cannot be turned on (see FIG. 11(b)).

When the fog switch knob 150 is rotated clockwise from the R2 position ("front fog on" position) to the R1 position ("fog off" position), the lock holes 41 allow the fog switch knob 150 to rotate. Therefore, the fog switch knob 150 returns to the position shown in FIG. 7(a). By this rotation of the fog switch knob 150, the front fog lights are turned off (see FIG. 11(c)).

Next, in the condition shown in FIG. 11(c), when the light switch knob 140 is rotated from the "off" position Q1 to the "first on" position Q2, a switch within the switch box is actuated by the lever shaft 20, thereby turning on the tail lights (see FIG. 11(d)).

Under these conditions, the projection 22 of the light switch knob 140 moves to the P2 position shown in FIG. 8. Therefore, the projection 22 moves to the non-lock surface 33 via the ramp 34. As a result, the lock piece 29 moves toward the light switch knob 140 due to the force of the coil springs 31, which removes the columns 30 from the lock holes 41. Therefore, the lock holes 41 and the columns 30 are disengaged, and the fog switch knob 150 is unlocked such that the knob 150 can be operated within its full range (see FIG. 10(a)). The lever 16 is located in the "first on" position Q2 when the projection 22 of the light switch knob 140 is in the P2 position.

Under these conditions, when the fog switch knob 150 is rotated from the R1 position ("fog off" position) to the R2 position ("front fog on" position), the condition shown in FIG. 10(a) is changed to the condition shown in FIG. 10(b), and the front fog lights are turned on (see FIG. 11(e)).

When the fog switch knob 150 is further rotated from the R2 position ("front fog on" position) to the R3 position ("front and rear fog on" position), the condition shown in FIG. 10(b) is changed to the condition shown in FIG. 10(c), and the rear fog lights are turned on (see FIG. 11(f)). In this condition, the fog off end 40b of the cancel hole 40 contacts the lever 16 of the light switch knob 140, which is located in the "first on" position Q2 as shown in FIG. 10(c).

Under these conditions, when the fog switch knob 150 is rotated from the R3 position ("front and rear fog on" position) to the R2 position ("front fog on" position), the rear fog lights are turned off (see FIGS. 11(g) and 10(b)).

Further, when the fog switch knob 150 is rotated from the R2 position ("front fog on" position) to the R1 position ("fog off" position), the front fog lights are turned off (see FIGS. 11(h) and 10(a)).

Next, in the condition shown in FIG. 11(h), when the light switch knob 140 is rotated from the "first on" position Q2 to the "second on" position Q3, the switch within the switch box is actuated by the lever shaft 20 to turn on the headlights (see FIG. 11(i)).

Under these conditions, the projection 22 of the light switch knob 140 moves to the P3 position shown in FIG. 8 and thus contacts the non-lock surface 33. Therefore, the lock holes 41 and the columns 30 are still disengaged, the fog switch knob 150 is unlocked, and the knob 150 can be operated within its full range (see FIG. 10(a)). The lever 16 is located in the "second on" position Q3 when the projection 22 of the light switch knob 140 moves to the P3 position.

When the fog switch knob 150 is rotated from the R1 position ("fog off" position) to the R3 position ("front and rear fog on" position), the condition shown in FIG. 10(a) is changed to the condition shown in FIG. 10(c). In FIG. 10(c), both the front and rear fog lights turn on (see FIG. 11(j)).

When the light switch knob 140 is rotated from the "second on" position Q3 to the "first on" position Q2, the headlights are turned off (see FIG. 11(k)), and the lever 16 contacts the fog off end 40b of the cancel hole 40 as shown in FIG. 10(c).

Further, when the light switch knob 140 is rotated from the "first on" position Q2 to the "off" position Q1, the lever 16 contacts the fog off end 40b of the cancel hole 40 and rotates the fog switch knob 150 from the R3 position ("front and rear fog on" position) to the R2 position ("front fog on" position) (see FIG. 11(l)). As a result, the rear fog lights are turned off and the front fog lights remain on.

Next, the characteristic features of the switch assembly 110 will be described.

In this embodiment, the light switch knob 140 (first rotary switch knob), which can rotate between a plurality of positions, and the fog switch knob 150 (second rotary switch knob), which can rotate between a plurality of positions, are coaxially arranged on the switch assembly 110. The assembly 110 includes the lock mechanism 100 for unlocking and locking the fog switch knob 150 in accordance with the rotational position of the light switch knob 140. Further, the cancel mechanism 200 is also included. The cancel mechanism 200 cancels the rear fog lights by turning off the rear fog lights and moving the fog switch knob 150 to the R2 position ("front fog on" position, i.e., a rear fog light off position) from the R3 position ("front and rear fog on") when the light switch knob 140 is turned off.

The cancel mechanism 200 includes the lever 16, which is fixed to the light switch knob 140, and an end 40b of the cancel hole 40, which is formed in the fog switch knob 150. Therefore, the fog switch knob 150 receives torque from the light switch knob 140 and is placed in the R2 position ("front fog on" position, i.e., the rear fog light off position). As a result, the number of components constituting the cancel mechanism is reduced.

Further, the fog switch knob 150 functions to turn on and off the different types of fog lights, i.e., the front fog lights and the rear fog lights. The knob 150 rotates between the R1 position for turning off the two types of fog lights, the R2 position for turning on the front fog lights, and the R3 position for turning on both the front fog lights and the rear fog lights. On the other hand, the light switch knob 140 serves to turn on and off the headlights and the tail lights.

In this embodiment, the lock mechanism 100 includes the lock piece 29 (operating member), which moves between the lock position and the non-lock position in accordance with the rotation of the light switch knob 140. When the columns 30 of the lock piece 29 move to the lock position, the columns 30 enter the lock holes 41 of the fog switch knob 150, which locks the fog switch knob 150. When the columns 30 of the lock piece 29 move to the non-lock position, the columns 30 are removed from the lock holes 41 of the fog switch knob 150, which unlocks the fog switch knob 150. As a result, the lock mechanism 100 has a small number of components and is relatively simple.

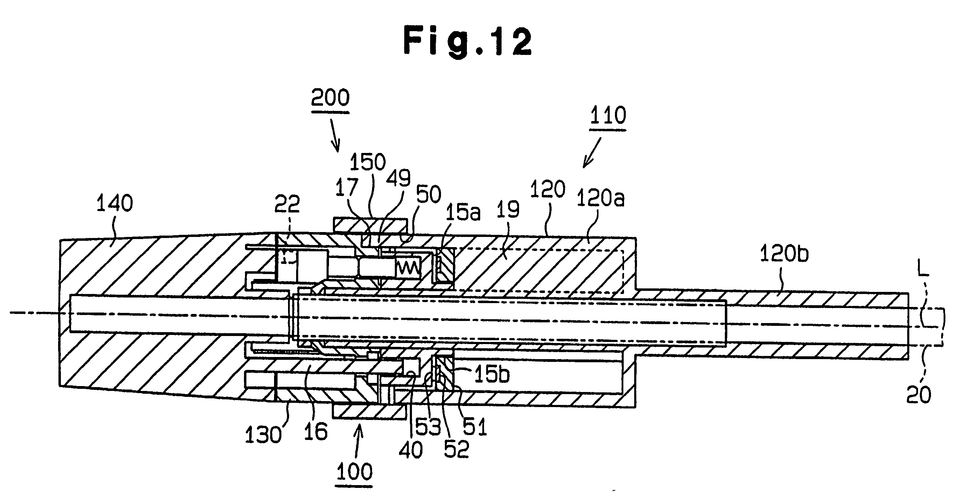

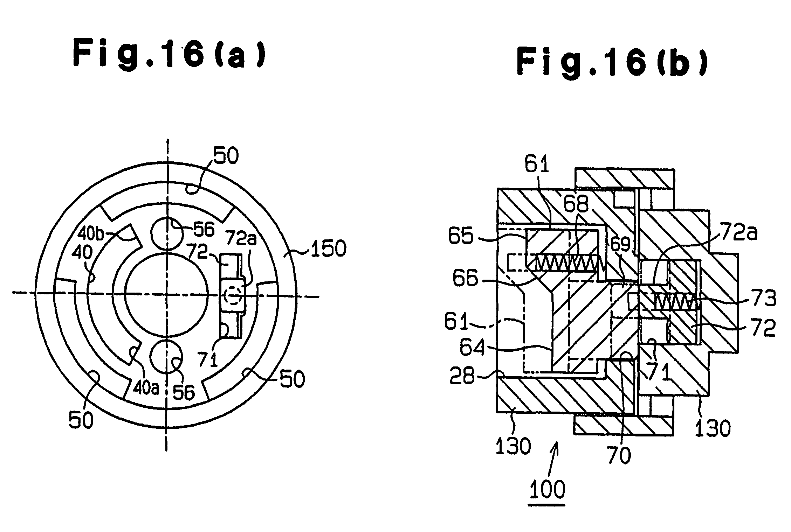

Next, a second embodiment will be described with reference to FIGS. 12 to 20.

Parts that are identical or equivalent to those of the first embodiment are denoted by the same reference numerals, and parts that are different will mainly be described. The cancel mechanism 200 has a similar construction to that of the first embodiment.

In this embodiment, switch-related members for turning on and off the front fog lights are omitted from the switch assembly 110. The rear fog lights can be turned on when the headlights are on and cannot be turned on when the headlights are turned off. This embodiment will be described in detail as follows.

The light switch knob 140 can be in an "off" position Q1, a "first on" position Q2 and a "second on" position Q3 as in the first embodiment. The second embodiment includes the lever 16, the positioning mechanism 26 and other parts that are similar to those of the first embodiment.

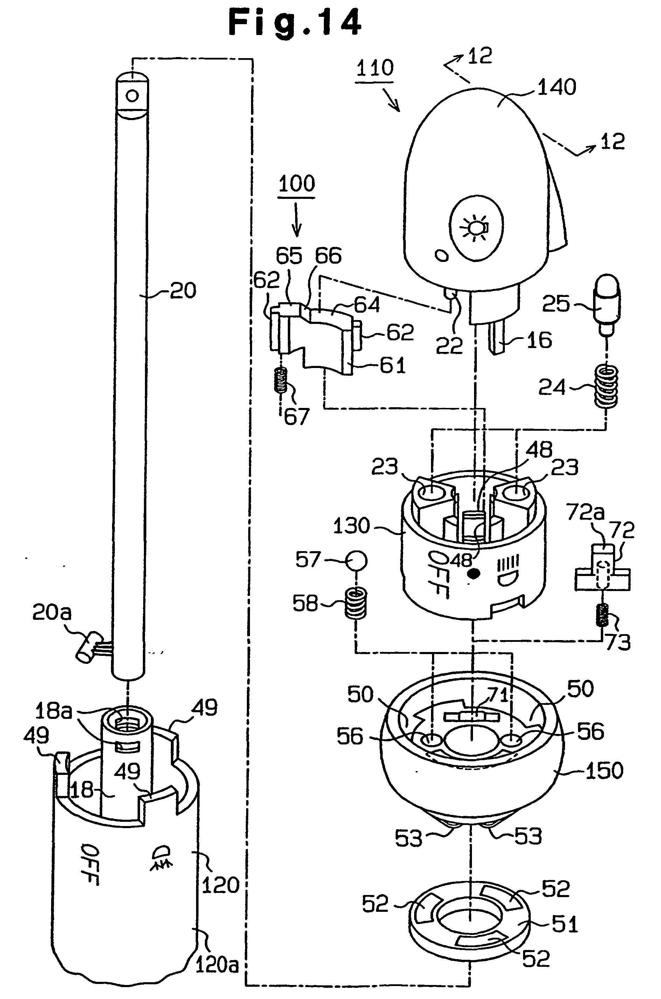

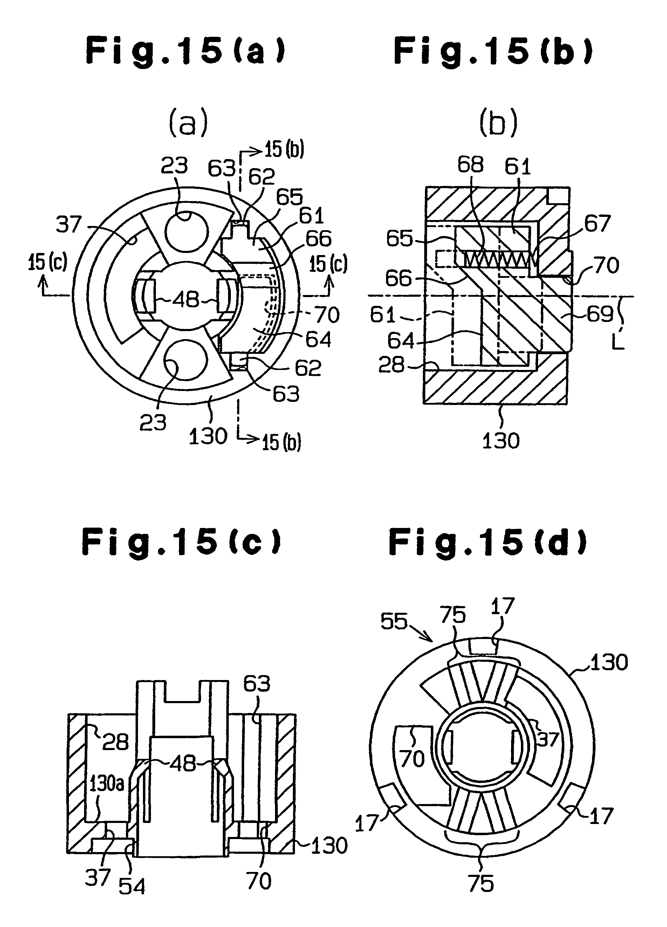

A fixed knob 130 has a lock release piece 61 instead of the lock piece 29 of the first embodiment. The piece 61 is accommodated in a hole 28. As shown in FIGS. 14 and 15, axially extending guide protrusions 62 are formed at both ends of the lock release piece 61. Guide grooves 63 are formed in the inner side surfaces of the hole 28, and the guide protrusions 62 are received in these grooves to permit axial movement of the piece 61.

The distal surface of the lock release piece 61, which faces the light switch knob 140, has a lock surface 64. The lock surface 64 is perpendicular to the axis L. A non-lock surface 65, which is closer to the light switch knob 140 than the lock surface 64, is also perpendicular to the axis L. A ramp 66 connects the surfaces 64 and 65.

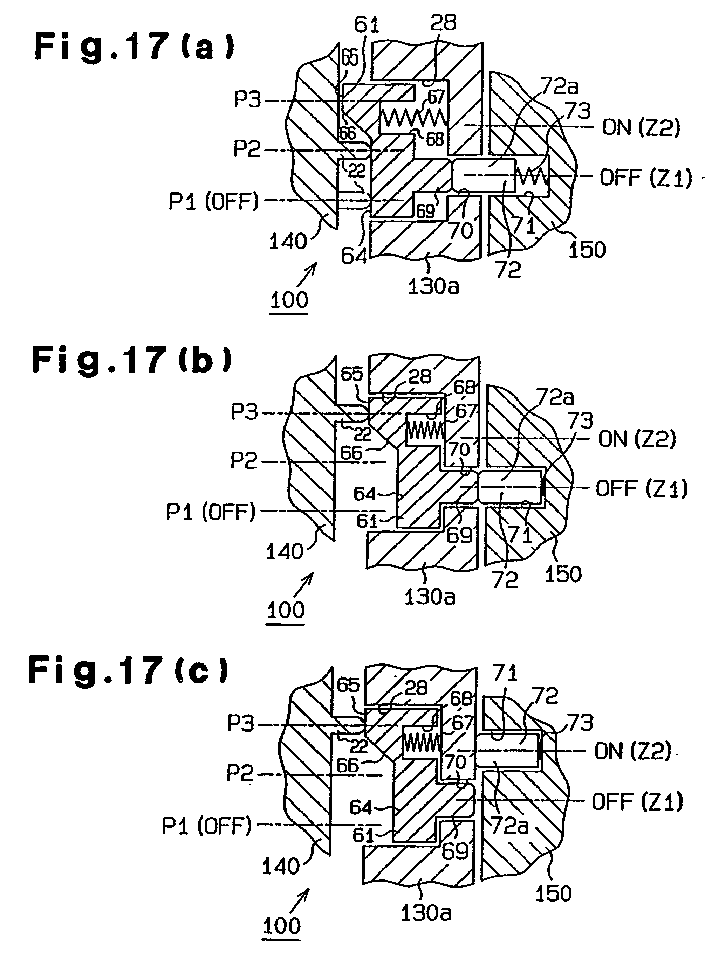

As shown in FIG. 17(a), the lock surface 64 corresponds to the P1 and P2 positions of the projection 22. Further, the non-lock surface 65 corresponds to the P3 position of the projection 22. A coil spring 67 is arranged between the bottom of the piece accommodating hole 28 and the bottom of a spring accommodating hole 68 of the lock release piece 61. The spring 67 causes the lock release piece 61 to contact the projection 22 at all times. A protuberance 69 extends axially from the proximal surface of the lock release piece 61.

In the bottom 130a of the hole 28 of the fixed knob 130, an insertion hole 70 is formed at a position corresponding to the protuberance 69 as shown in FIGS. 15(a) to(d). The protuberance 69 loosely fit into this hole 70.

When the projection 22 is in the P3 position as shown in FIG. 17(b), the projection 22 contacts the non-lock surface 65 of the lock release piece 61, and the proximal surface of the protuberance 69 of the lock release piece 61 becomes substantially flush with the proximal surface of the fixed knob 130. This is referred to as the non-lock position.

Further, when the projection 22 is in the P1 position or in the P2 position as shown in FIG. 17(a), the projection 22 contacts the lock surface 64 of the lock release piece 61, and the protuberance 69 of the lock release piece 61 is spaced from the proximal surface of the fixed knob 130 to provide a receiving space within the insertion hole 70. This position is referred to as the lock position.

On the other hand, in the inner body of the fog switch knob 150, a hole 71 is formed at a position corresponding to the protuberance 69. A lock piece 72, or lock member, is accommodated in the hole 71. The lock piece 72 is urged toward the fixed knob 130 by a coil spring 73 within the hole 71. A projection 72a formed on the upper middle surface of the lock piece 72 fits in the insertion hole 70. That is, the projection 72a is received in the space formed within the insertion hole 70 when the lock release piece 61 is in the lock position.

A pair of diametrically opposed positioning portions 75 are formed on the proximal surface of the fixed knob 130. The positioning portions 75, the detent balls 57 and the coil springs 58 constitute the fog switch knob positioning mechanism 55. Further, in this embodiment, the positioning mechanism 55 allows the fog switch knob 150 to rotate between a Z1 position and a Z2 position.

The Z1 position is a "fog off" position, in which the fog switch knob 150 turns off the rear fog lights. The Z2 position is a "rear fog on" position in which the fog switch knob 150 turns on the rear fog lights.

When the fog switch knob 150 is in the Z1 position ("fog off" position), the projection 72a of the lock piece 72 connects the protuberance 69 of the lock release piece 61 regardless of whether the piece61 is in the lock position or the non-lock position, as shown in FIG. 17(a) or(b).

The projection 22, the lock release piece 61, the coil spring 67, the lock piece 72 and the coil spring 73 constitute the lock mechanism 100. The coil springs 67 and 73 constitute urging means.

The operation of the thus constructed switch assembly 110 will be described as follows.

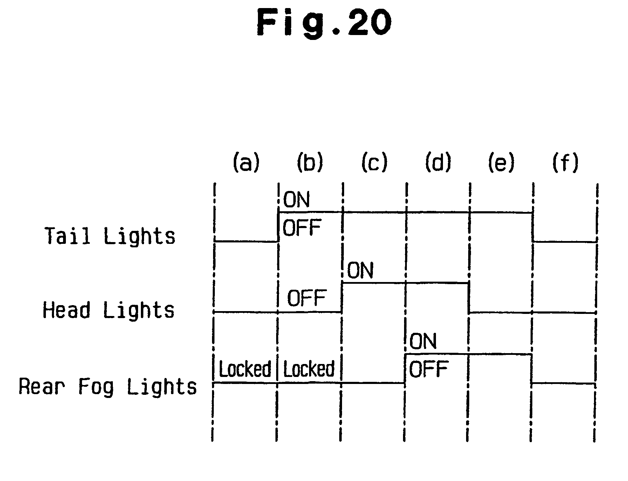

Initially, the light switch knob 140 is assumed to be in the "off" position Q1 and the fog switch knob 150 in the Z1 position ("fog off" position). Therefore, the headlights, the tail lights and the rear fog lights are turned off (see FIG. 20(a)).

Thus, initially, the projection 22 of the light switch knob 140 is in the P1 position, shown in FIG. 17(a), and contacts the lock surface 64. As a result, the protuberance 69 is located in the lock position and is withdrawn from the insertion hole 70. The projection 72a of the lock piece 72 is received in the receiving space within the insertion hole 70 due to the force of the coil spring 73. The projection 72a contacts the protuberance 69 as shown.

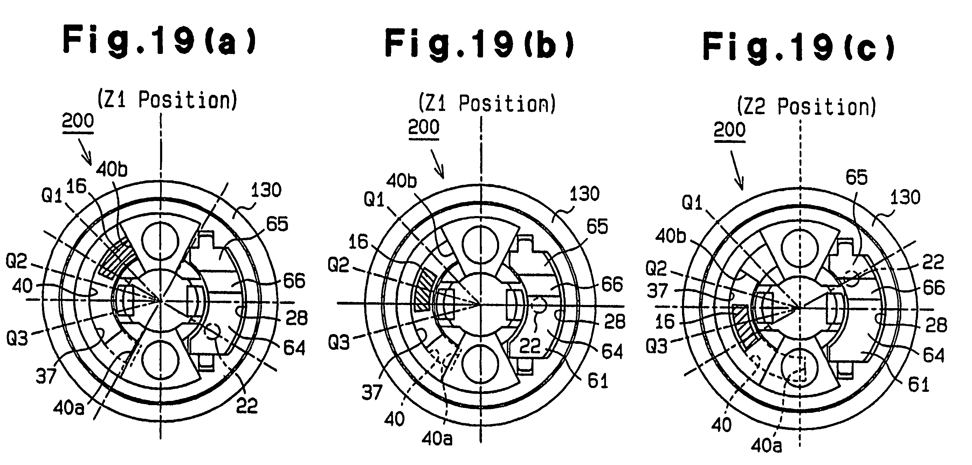

Further, the lever 16 is in the "off" position Q1 shown in FIG. 19(a).

Therefore, the fog switch knob 150 is locked and cannot be rotated, since the lock piece 72 is within the insertion hole 70.

Next, when the light switch knob 140 is rotated from the "off" position Q1 to the "first on" position Q2, the tail lights turn on (see FIG. 20(b)), and the projection 22 moves to the P2 position. In this condition, the fog switch knob 150 cannot be rotated since the lock piece 72 is locked as shown in FIG. 17(a). At this time, the lever 16 is in the "first on" position Q2 shown in FIG. 19(b).

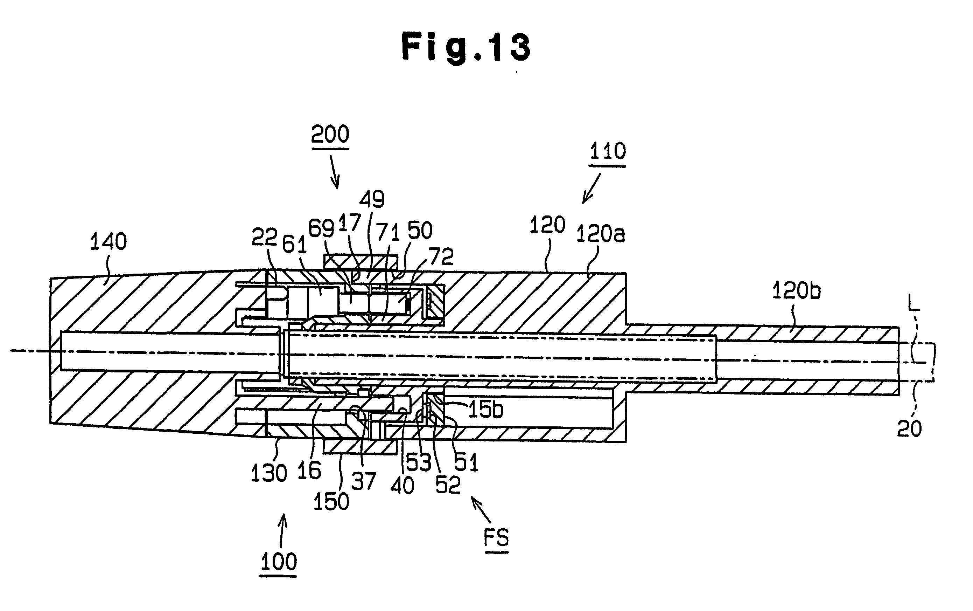

Next, when the light switch knob 140 is rotated from the "first on" position Q2 to the "second on" position Q3, the headlights turn on (see FIG. 20(c)), and the projection 22 moves to the P3 position (see FIGS. 17(b) and 13). That is, since the projection 22 contacts the non-lock surface 65 and pushes the lock release piece 61 against the force of the coil springs 67 and 73, the protuberance 69 moves into the insertion hole 70, and the proximal surface of the protuberance 69 becomes substantially flush with the surface of the bottom 130a. As a result, the fog switch knob 150 becomes operable. At this time, the lever 16 is in the "second on" position Q3 shown in FIG. 19(c).

Under these conditions, when the fog switch knob 150 is rotated from the Z1 position ("fog off" position) to the Z2 position ("rear fog on" position), the rear fog lights turn on (see FIG. 20(d)), and the projection 72a of the lock piece 72 slides along the proximal surface of the bottom 130a as shown in FIG. 17(c).

Further, since the fog switch knob 150 has rotated from the Z1 position ("fog off" position) to the Z2 position ("rear fog on" position), the cancel hole 40 of the fog switch knob 150 has also moved from the position shown in FIG. 19(b) to the position shown in FIG. 19(c). That is, the fog off end 40b of the cancel hole 40 passes the "off" position Q1 of the lever 16.

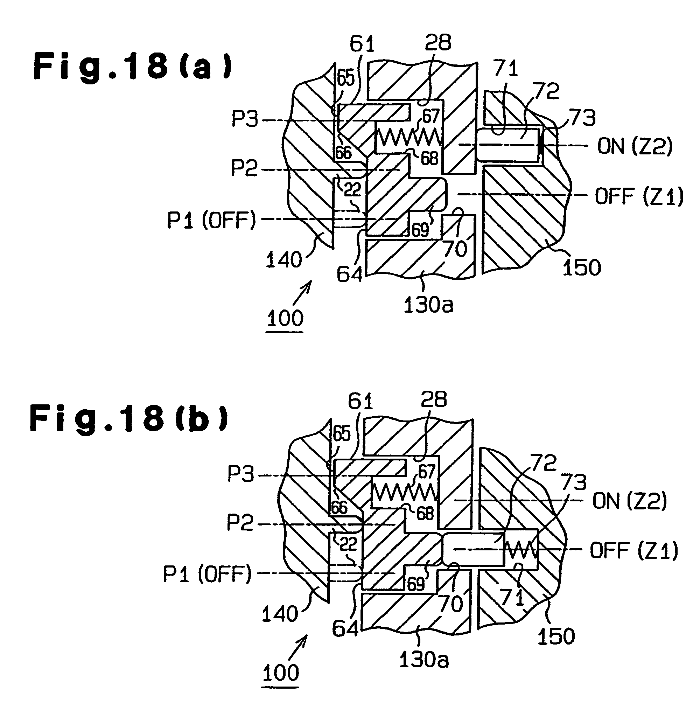

Next, in this condition, when the light switch knob 140 is rotated from the "second on" position Q3 to the "first on" position Q2, the headlights turn off (see FIG. 20(e)), and the projection 22 is moved to the lock surface of the lock release piece 61 as shown in FIG. 18(a). As a result, the lock release piece 61 is moved toward the light switch knob 140 by the force of the coil spring 67. In response, the protuberance 69 is withdrawn from the insertion hole 70, and the receiving space is unoccupied.

At this time, the lever 16 is in the "first on" position Q2 shown in FIG. 19(c) and contacts the fog off end 40b of the cancel hole 40.

When the light switch knob 140 is rotated from the "first on" position Q2 to the "off" position Q1, the lever 16 engages the fog off end 40b of the cancel hole 40 and rotates the fog switch knob 150 from the Z2 position ("rear fog on" position) to the Z1 position ("fog off" position) (see FIG. 20(f)). As a result, the lock piece 72 moves from the position shown in FIG. 18(a) to the position shown in FIG. 18(b), thereby causing the projection 72a to enter the receiving space within the insertion hole 70. In this condition, the rear fog lights are turned off, the front fog lights are turned on, and the fog switch knob 150 is locked and cannot be rotated.

Note that the fog switch knob 150 is similarly locked when the fog switch knob 150 is rotated from the Z2 position ("rear fog on" position) to the Z1 position ("fog off" position) in the state shown in FIG. 18(a).

While the fog switch knob 150 serves to control the rear fog lights in the second embodiment, the knob 150 may also serve to turn on and off the front fog lights.

While the light switch knob 140 is switchable between the three positions Q1 to Q3 in the first and second embodiments, the knob 140 may be switchable between only two positions, or between four or more positions.

While the lever 16 is located on the light switch knob 140 and the cancel hole 40 is located in the fog switch knob 150 in this embodiment, the lever 16 may be located on the knob 150 and the cancel hole 40 may be located in the knob 140.

It should be apparent to those skilled in the art that the present invention may be embodied in many other specific forms without departing from the spirit or scope of the invention. Therefore, the present examples and embodiments are to be considered as illustrative and not restrictive and the invention is not to be limited to the details given herein, but may be modified within the scope of the appended claims.

## Claims

1. A rotary switch assembly for a vehicle, said assembly having a rotary light switch knob (140) movable between a plurality of positions including an ON-position and an OFF-position, a rotary fog switch knob (150) coaxially aligned with the light switch knob (140) and movable between plurality of positions includinga REAR FOG ON-position anda REAR FOG OFF-position, a lock mechanism (100) for selectively locking and unlocking the fog switch knob (150) based on the position of the light switch knob(140), and a cancel mechanism (200) for moving the fog switch knob (150) to its REAR FOG OFF-position when the fog switch knob (150) is in its REAR FOG ON-position and the light switch knob (140) is shifted to its OFF-position, wherein said cancel mechanism (200) includes a link member (16) provided on one of the light switch knob (140) and the fog switch knob (150) and an engaging portion (40b) provided with the other of the light switch knob (140) and the fog switch knob (150), said engaging portion (40b) being arranged to contact the link member (16), wherein said fog switch knob (150) receives torque from the light switch knob (140) and rotates to its REAR FOG OFF-position when the light switch knob (140) is rotated to its OFF-position, **characterized in that** said lock mechanism (100) and said cancel mechanism (200) are both constituted by axially cooperating parts.

2. The assembly as set forth in Claim 1, **characterized in that** the light switch knob (140) is movable between a TAIL LIGHT-ON position and a TAIL LIGHT-OFF position, the fog switch knob (150) has a FRONT FOG-ON/REAR FOG-ON position (R3), a FRONT FOG ON/REAR FOG OFF-position (R2) and A FRONT FOG OFF/REAR FOG OFF-position (R1), and the fog switch knob (150) rotates to the FRONT FOG ON/REAR FOG OFF-position (R2) from the FRONT FOG ON/REAR FOG ON-position (R3) when the light switch knob (140) is rotated from the TAIL LIGHT ON-position to the TAIL LIGHT OFF-position.

3. The assembly as set forth in Claim 1, **characterized in that** the light switch knob (140) is movable between a TAIL LIGHT ON-position and a TAIL LIGHT OFF-position, the fog switch knob (150) has a REAR FOG ON-position (Z2) and REAR FOG OFF-position (Z1) to selectively turns on and off a rear fog light, the fog switch knob (150) rotates to the REAR FOG OFF-position (Z1) from the REAR FOG ON-position (Z2) when the light switch knob (140) is rotated from the TAIL LIGHT ON-position to the TAIL LIGHT OFF-position.

4. The assembly as set forth in any one of the preceding claims, **characterized in that** a lock piece (29) is selectively movable to a locking position and an unlocking position in accordance with rotary movement of the light switch knob (140), wherein said lock piece (29) engages and locks the fog switch knob (150) in the locking position and wherein said lock piece (29) disengages and unlocks the fog switch knob (150) in the unlocking position.

5. The assembly as set forth in any one of Claims 1 to 3, **characterized in that** a lock release piece (29) is selectively movable to a locking position and an unlocking position in accordance with rotary movement of the light switch knob (140) and that a cam surface (32, 33) is located in the vicinity of the fog switch knob (150), wherein said cam surface (32, 33) locks the fog switch knob (150) when the lock release piece (29) is in the locking position, and wherein said cam surface (32, 33) unlocks the fog switch knob (150) when the lock release piece (29) is in the unlocking position.

6. The assembly as set forth in any one of the preceding claims, **characterized by** a positioning mechanism (26) that positions one of the light switch knob (140) and the fog switch knob (150) in one of several angular positions.

7. The assembly as set forth in Claim 6, **characterized in that** said positioning mechanism includes a positioning portion (21) that has recesses corresponding to the switching locations and projections, each projection being formed between the adjacent recesses, and a positioning piece (25) coupled to one of the light switch knob (140) and the fog switch knob (150), the positioning piece (25) being opposed to the positioning portion (21) to engage one of the recesses to position the other of the light switch knob (140) and the fog switch knob (150).

## Patentansprüche

1. Drehschalteranordnung für ein Fahrzeug, mit einem Drehlichtschalter (140), der zwischen mehreren Stellungen, einschließlich einer Em-Stellung und einer Aus-Stellung, beweglich ist, einem Dreh-Nebellichtschalter (150), der koaxial zum Lichtschalter (140) ausgenchtet und zwischen mehreren Stellungen, einschheßlich einer Nebelschlußlicht-Ein-Stellung und einer Nebelschlußlicht-Aus-Stellung, beweglich ist, einem Sperrmechanismus (100) zum wahlweisen Ver- und Entriegeln des Nebellichtschalters (150) aufgrund der Stellung des Lichtschalters (140), und einem Rückstellmechanismus (200) zum Bewegen des Nebellichtschalters (150) in seine Nebeischlußlicht-Aus-Stellung, wenn der Nebellichtschalter (150) sich in seiner Nebelschlußlicht-Ein-Stellung befindet und der Lichtschalter (140) in seine Aus-Stellung verschoben wird, wobei der Rückstellmechanismus (200) ein Verbindungsglied (16), das am Lichtschalter (140) oder am Nebellichtschalter (150) vorgesehen ist, und einen Eingriffsabschnitt (40b) aufweist, der jeweils am Lichtschalter (140) bzw. Nebellichtschalter (150) vorgesehen ist, wobei der Eingriffsabschnitt (40b) so angeordnet ist, daß er am Verbindungsglied (16) anliegt, und wobei der Nebellichtschalter (150) vom Lichtschalter (140) ein Drehmoment erfährt und sich in seine Nebelschlußlicht-Aus-Stellung dreht, wenn der Lichtschalter (140) in seine Aus-Stellung gedreht wird, **dadurch gekennzeichnet, daß** sowohl der Sperrmechanismus (100) als auch der Ruckstellmechanismus (200) durch axial zusammenwirkende Teile gebildet sind.

2. Anordnung nach Anspruch 1, **dadurch gekennzeichnet, daß** der Lichtschalter (140) zwischen einer Rücklicht-Ein-Stellung und einer Rücklicht-Aus-Stellung beweglich ist, der Nebellichtschalter (150) eine Nebelfrontlicht-Ein-/Nebelschlußlicht-Aus-Stellung (R3), eine Nebelfrontlicht-Ein-/Nebelschlußlicht-Aus-Stellung (R2) und eine Nebelfrontlicht-Aus-/Nebelschlußlicht-Aus-Stellung (R1) aufweist, und sich der Nebellichtschalter (150) von der Nebelfrontlicht-Ein-/Nebelschlußlicht-Ein-Stellung (R3) in die Nebelfrontlicht-Ein-/Nebelschlußlicht-Aus-Stellung (R2) dreht, wenn der Lichtschalter (140) von der Rücklicht-Ein-Stellung in die Rücklicht-Aus-Stellung gedreht wird.

3. Anordnung nach Anspruch 1, **dadurch gekennzeichnet, daß** der Lichtschalter (140) zwischen einer Rücklicht-Ein-Stellung und einer Rucklicht-Aus-Stellung beweglich ist, wobei der Nebellichtschalter (150) eine Nebelschlußlicht-Ein-Stellung (Z2) und eine Nebelschlußlicht-Aus-Stellung (Z1) aufweist, um ein Nebelschlußlicht wahlweise ein- und auszuschalten, wobei sich der Nebellichtschalter (150) von der Nebelschlußlicht-Ein-Stellung (Z2) in die Nebelschlußlicht-Aus-Stellung (Z1) dreht, wenn der Lichtschalter (140) von der Rücklicht-Ein-Stellung in die Rücklicht-Aus-Stellung gedreht wird.

4. Anordnung nach einem der vorhergehenden Ansprüche, **dadurch gekennzeichnet, daß** ein Verriegelungsteil (29) entsprechend der Drehbewegung des Lichtschalters (140) wahlweise in eine Verriegelungsstellung und in eine Entriegelungsstellung beweglich ist, wobei das Verriegelungsteil (29) in der Verriegelungsstellung in Eingriff mit dem Nebellichtschalter (150) tritt und diesen verriegelt und in der Entriegelungsstellung den Eingriff mit dem Nebellichtschalter (150) löst und diesen entriegelt.

5. Anordnung nach einem der Anspruche 1 bis 3, **dadurch gekennzeichnet, daß** ein Entriegelungsteil (29) abhängig von der Drehbewegung des Lichtschalters (140) wahlweise in eine Verriegelungsstellung und in eine Entriegelungsstellung beweglich ist, und daß eine Nockenfläche (32,33) in der Nähe des Nebellichtschalters (150) angeordnet ist, wobei die Nockenfläche (32,33) den Nebellichtschalter (150) verriegelt, wenn sich das Entriegelungsteil (29) in der Verriegelungsstellung befindet, und den Nebellichtschalter (150) entriegelt, wenn sich das Entriegelungsteil (29) in der Entriegelungsstellung befindet

6. Anordnung nach einem der vorhergehenden Ansprüche, **gekennzeichnet durch** einen Positioniermechanismus (26), der den Lichtschalter (140) oder den Nebellichtschalter (150) in einer von mehreren Winkelstellungen positioniert.

7. Anordnung nach Anspruch 6, **dadurch gekennzeichnet, daß** der Positioniermechanismus einen Positionierabschnitt (21), der den Schaltstellungen entsprechende Vertiefungen und Vorsprunge aufweist, wobei jeder Vorsprung zwischen den benachbarten Vertiefungen ausgebildet ist, und ein Positionierteil (25) aufweist, das mit dem Lichtschalter (140) oder dem Nebellichtschalter (150) gekoppelt ist und dem Positionierabschnitt (21) gegenüberliegt, um in Eingriff mit einer der Vertiefungen zu treten und den Nebellichtschalter (150) bzw. den Lichtschalter (140) zu positionieren.

## Revendications

1. Interrupteur rotatif pour véhicule, ledit interrupteur comportant un bouton d'interrupteur rotatif d'éclairage (140) mobile entre une pluralité de positions comprenant une position MARCHE et une position ARRET, un bouton d'interrupteur rotatif d'antibrouillard (150) aligné coaxialement avec le bouton d'interrupteur d'éclairage (140) et mobile entre une pluralité de positions comprenant une position MARCHE ANTIBROUILLARD ARRIERE et une position ARRET ANTIBROUILLARD ARRIERE, un mécanisme de verrouillage (100) pour verrouiller et déverrouiller de manière sélective le bouton d'interrupteur d'antibrouillard (150) en fonction de la position du bouton d'interrupteur d'éclairage (140), et un mécanisme d'annulation (200) pour déplacer le bouton d'interrupteur d'antibrouillard (150) dans sa position ARRET ANTIBROUILLARD ARRIERE lorsque le bouton d'interrupteur d'antibrouillard (150) est dans sa position MARCHE ANTIBROUILLARD ARRIERE et que le bouton d'interrupteur d'éclairage (140) est basculé dans sa position ARRET, dans lequel ledit mécanisme d'annulation (200) comprend un élément de liaison (16) prévu sur l'un du bouton d'interrupteur d'éclairage (140) et du bouton d'interrupteur d'antibrouillard (150) et une partie d'accouplement (40b) prévue sur l'autre du bouton d'interrupteur d'éclairage (140) et du bouton d'interrupteur d'antibrouillard (150), ladite partie d'accouplement (40b) étant agencée pour venir en contact avec l'élément de liaison (16), dans lequel ledit bouton d'interrupteur d'antibrouillard (150) reçoit un couple du bouton d'interrupteur d'éclairage (140) et tourne dans sa position ARRET ANTIBROUILLARD ARRIERE lorsque le bouton d'interrupteur d'éclairage (140) est tourné dans sa position ARRET, **caractérisé en ce que**
ledit mécanisme de verrouillage (100) et ledit mécanisme d'annulation (200) sont tous deux constitués par des parties coopérant axialement.

2. Interrupteur selon la revendication 1, **caractérisé en ce que** le bouton d'interrupteur d'éclairage (140) est mobile entre une position MARCHE FEU ARRIERE et une position ARRET FEU ARRIERE, le bouton d'interrupteur d'antibrouillard (150) a une position MARCHE ANTIBROUILLARD AVANT/MARCHE ANTIBROUILLARD ARRIERE (R3), une position MARCHE ANTIBROUILLARD AVANT/ARRET ANTIBROUILLARD ARRIERE (R2) et une position ARRET ANTIBROUILLARD AVANT/ARRET ANTIBROUILLARD ARRIERE (R1), et le bouton d'interrupteur d'antibrouillard (150) tourne dans la position MARCHE ANTIBROUILLARD AVANT/ARRET ANTIBROUILLARD ARRIERE (R2) à partir de la position MARCHE ANTIBROUILLARD AVANT/MARCHE ANTIBROUILLARD ARRIERE (R3) lorsque le bouton d'interrupteur d'éclairage (140) est tourné de la position MARCHE FEU ARRIERE dans la position ARRET FEU ARRIERE.

3. Interrupteur selon la revendication 1, **caractérisé en ce que** le bouton d'interrupteur d'éclairage (140) est mobile entre une position MARCHE FEU ARRIERE et une position ARRET FEU ARRIERE, le bouton d'interrupteur d'antibrouillard (150) a une position MARCHE ANTIBROUILLARD ARRIERE (Z2) et une position ARRET ANTIBROUILLARD ARRIERE (Z1) pour mettre en marche et arrêter de manière sélective un feu antibrouillard arrière, le bouton d'interrupteur d'antibrouillard (150) tourne dans la position ARRET ANTIBROUILLARD ARRIERE (Z1) à partir de la position MARCHE ANTIBROUILLARD ARRIERE (Z2) lorsque le bouton d'interrupteur d'éclairage (140) est tourné de la position MARCHE FEU ARRIERE dans la position ARRET FEU ARRIERE.

4. Interrupteur selon l'une quelconque des revendications précédentes, **caractérisé en ce qu'**une pièce de verrouillage (29) est déplacée de manière sélective dans une position de verrouillage et une position de déverrouillage conformément à un mouvement de rotation du bouton d'interrupteur d'éclairage (140), dans lequel ladite pièce de verrouillage (29) vient en prise avec le bouton d'interrupteur d'antibrouillard (150) et le verrouille dans la position de verrouillage, et dans lequel ladite pièce de verrouillage (29) se désengage du bouton d'interrupteur d'antibrouillard (150) et le déverrouille dans la position de déverrouillage.

5. Interrupteur selon l'une quelconque des revendications 1 à 3, **caractérisé en ce qu'**une pièce de libération de verrouillage (29) peut être déplacée de manière sélective dans une position de verrouillage et une position de déverrouillage conformément à un mouvement de rotation du bouton d'interrupteur d'éclairage (140), et **en ce qu'**une surface de came (32, 33) est située dans le voisinage du bouton d'interrupteur d'antibrouillard (150), dans lequel ladite surface de came (32, 33) verrouille le bouton d'interrupteur d'antibrouillard (150) lorsque la pièce de libération de verrouillage (29) est dans la position de verrouillage, et dans lequel ladite surface de came (32, 33) déverrouille le bouton d'interrupteur d'antibrouillard (150) lorsque la pièce de libération de verrouillage (29) est dans la position de déverrouillage.

6. Interrupteur selon l'une quelconque des revendications précédentes, **caractérisé par** un mécanisme de positionnement (26) qui positionne l'un du bouton d'interrupteur d'éclairage (140) et du bouton d'interrupteur d'antibrouillard (150) dans l'une de plusieurs positions angulaires.

7. Interrupteur selon la revendication 6, **caractérisé en ce que** ledit mécanisme de positionnement comprend une partie de positionnement (21) qui comporte des évidements correspondant aux emplacements de commutation et des protubérances, chaque protubérance étant formée entre les évidements adjacents, et une pièce de positionnement (25) couplée à l'un du bouton d'interrupteur d'éclairage (140) et du bouton d'interrupteur d'antibrouillard (150), la pièce de positionnement (25) étant face à la partie de positionnement (21) pour venir en prise avec l'un des évidements pour positionner l'autre du bouton d'interrupteur d'éclairage (140) et du bouton d'interrupteur d'antibrouillard (150).
